# EUROPÄISCHE PATENTANMELDUNG

(11) **EP 0 824 284 A1**
(43) Veröffentlichungstag der Anmeldung: **18.02.1998**
(21) Anmeldenummer: 97111734.6
(22) Anmeldetag: 10.07.1997
(51) Int. Cl.: H02G 3/18

(54) **Vorrichtung zum Verschliessen von gebohrten Kabelauslassöffnungen**

(30) Priorität: 10.08.1996 DE 29613888 U
(71) Anmelder: Albert Ackermann GmbH & Co. KG, 51643 Gummersbach (DE)
(72) Erfinder: Klöck, Helmut, 51647 Gummersbach (DE)
(74) Vertreter: Wilhelm & Dauster Patentanwälte European Patent Attorneys

(57) **Zusammenfassung**

Es ist bekannt, die Kabelauslaßöffnungen von Hohlbauböden in Bürogebäuden oder dergleichen mit einem Blinddeckel zu verschließen. Diese Blinddeckel werden dabei in Einsätze mit einem Teppichschutzrahmen eingesetzt. Die Stabilität solcher Abschlüsse kann unter Umständen nicht ausreichend sein. Auch der vorhandene Teppichschutzrahmen kann störend sein.

Durch die Erfindung wird daher vorgeschlagen, einen offenen und an den aneinandergrenzenden Enden durch eine Schraubverbindung zusammengehaltenen Spannring als Nivellierrahmen vorzusehen, der mit zum Ringinneren gerichteten Laschen versehen ist, die mit Nivellierschrauben und mit einer Auflage- und Befestigungsfläche für den Blinddeckel versehen ist. Diese Ringe lassen sich in einfacher Weise an den Durchmesser der Bohrung und auch an die gewünschte Höhe anpassen.

## Beschreibung

Die Erfindung betrifft eine Vorrichtung zum Verschließen von gebohrten Kabelauslaßöffnungen in Hohlraumböden von Bürogebäuden oder dergleichen mit einem Blinddeckel.

Es ist bekannt, daß man z.B. in Bürogebäuden Hohlraumböden verlegt, um unterhalb der Büroräume Platz für die flexible Verlegung von elektrischen Stark- oder Schwachstromkabeln zu haben. An den Stellen, an den jeweils ein Anschluß gewünscht ist, genügt es, eine kreisrunde Öffnung zu bohren und eine becherartige Halterung zum Einsetzen entsprechender Installationsgeräte anzuordnen. Beispielsweise können zu diesem Zweck Gerätebecher verwendet werden, wie sie in der DE-PS 25 16 524 beschrieben sind.

Sollen solche bereits gebohrten Öffnungen jedoch wieder verschlossen werden, weil beispielsweise eine Umgestaltung des Büroraumes oder ein Umsetzen von Einrichtungsgegenständen vorgesehen wird, dann werden in die auch für die Aufnahme der Gerätebecher vorgesehenen Einsätze Blinddeckel eingesetzt. Die Einsätze übergreifen dabei den Raumboden mit einem Teppichschutzrahmen, der auch als Halterung dient. Die Stabilität eines solchen Abschlusses einer Öffnung durch einen Blinddeckel hängt von der Ausbildung des Einsatzes ab, was nicht in allen Fällen ausreichend ist. Dazu kommt, daß in jedem Fall ein Teppichschutzrahmen vorhanden ist, der aus ästhetischen Gründen störend sein kann.

Der vorliegenden Erfindung liegt daher die Aufgabe zugrunde, für solche, nicht mehr gebrauchte Auslaßlöcher in Hohlraumböden eine bodenbündige und trittsichere Abdeckung zu schaffen.

Ausgehend von einer Vorrichtung der eingangs genannten Art, ist die Erfindung gekennzeichnet durch einen Ring als Nivellierrahmen, der mit zum Ringinneren gerichteten Laschen versehen ist, die mit Nivellierschrauben und mit einer Auflage- und Befestigungsfläche für den Blinddeckel versehen sind.

Durch diese Ausgestaltung wird eine stabile Abstützung für den Blinddeckel geschaffen, die aber jederzeit in einfacher Weise von oben in die zu verschließende Öffnung eingesetzt und dann mit dem Blinddeckel verschlossen werden kann. Besonders zweckmäßig ist es dabei in Weiterbildung der Erfindung, wenn der Ring als ein offener und an den aneinandergrenzenden Enden durch eine Schraubverbindung zusammengehaltener Spannring ausgebildet wird, der sich nach dem Einsetzen und Einstellen in der Höhe auch in einfacher Weise an den Durchmesser der Bohrung anpassen und dort verklemmen laßt, ohne daß bei seinem Einbau toleranzbedingte Schwierigkeiten zu erwarten sind.

In Weiterbildung der Erfindung können die Laschen U-förmig ausgebildet und mit dem die beiden Schenkel des U verbindenden Steg in Achsrichtung des Ringes so an diesem befestigt sein, daß der erste, nach dem Einbau obenliegende Schenkel, um mindestens die Dicke des Deckels unterhalb des Randes und innerhalb des Ringes liegt. Dieser, innerhalb des Ringes liegende Schenkel, kann auch eine parallel zum Rand des Ringes verlaufende Auflagefläche bilden und einen einseitig offenen, von einer Kante des Schenkel ausgehenden ,Schlitz für eine Befestigungsschraube des Deckels aufweisen. Wird der Schlitz in Umfangsrichtung des Ringes ausgerichtet, dann wird es auch möglich, die Befestigungsschrauben schon mit dem Blinddeckel einzusetzen und den Blinddeckel durch Verdrehen in Umfangsrichtung mit den Laschen zu verbinden. Dabei ist es in Weiterbildung der Erfindung zweckmäßig, dem Deckel Schrauben mit Gleitmuttern zuzuordnen, die nach dem Einschwenken der Schraubenschäfte in die Schlitze unverdrehbar an der Innenwand des Ringes anliegen. Die Schlitze können dabei zur Erleichterung des Einschwenkvorganges der Schraubenschäfte mit einer Einführungsschräge versehen werden.

In Weiterbildung der Erfindung kann der zweite Schenkel jeder Lasche mit einer aus dem Ring in dessen Achsrichtung herausragenden Nivellierschraube versehen sein, die auf der Grundfläche des Hohlraumbodens aufsetzbar ist. Dabei ist es bei dieser Ausführungsform zweckmäßig, wenn der Schlitz in dem ersten Schenkel jeder Lasche bis zu einem in Achsrichtung des Ringes mit der Nivellierschraube fluchtenden Bereich reicht, weil dann die Nivellierschraube von oben her durch den Schlitz für einen Schraubendreher zugängig ist und auf das gewünschte Maß eindrehbar ist.

In Weiterbildung der Erfindung kann schließlich der Steg jeder Lasche mit mindestens einer Schraube am Ring befestigbar sein, die wahlweise in Öffnungen einsetzbar ist, die in der Höhe des Ringes versetzt angebracht sind. Die Öffnungen können dabei zum Einsetzen einer Schraube ausgebildet und längs eines Spirallinienabschnittes verlaufen, der schräg zur Achse des Ringes am Umfang des Ringes verläuft. Durch diese Ausgestaltung wird es möglich, die Laschen in verschiedener Höhe am Ring anzuordnen, so daß entweder Blinddeckel mit verschiedener Dicke bodenbündig angeordnet werden können, oder Blinddeckel mit einem Fußbodenbelag, insbesondere einem Teppichbelag so ausgerichtet werden können, daß der Belag bodenbündig verläuft. Der Ring kann aber auch geringfügig über einen Teppichbodenbelag als Trenn- oder Anlegerahmen überstehen. Diese Ausgestaltung ermöglicht eine ästhetisch ansprechende und unauffällige Blinddeckelanordnung für Räume mit Fußbodenbelag. In allen Fällen aber ergibt sich eine tritt- und belastungssichere Abdeckung, die keine aus der Bodenfläche herausragende Teile besitzt.

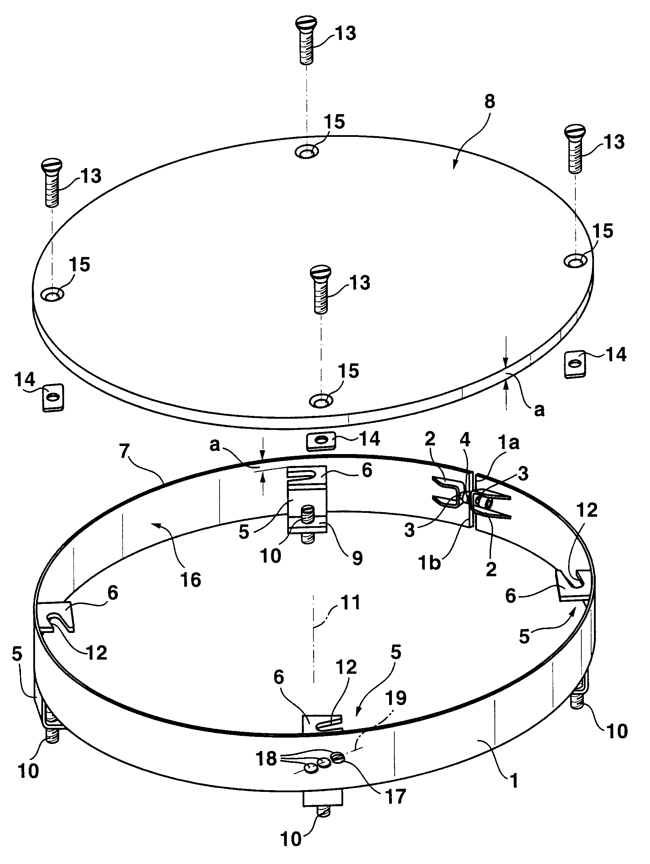

Die Erfindung ist anhand eines Ausführungsbeispieles in der Zeichnung dargestellt und wird im folgenden erläutert. Die einzige Figur zeigt dabei einen Spannring (1), der an seinen beiden aneinandergrenzenden Enden (1a und 1b) mit auf der Innenseite angesetzten Laschen (2) mit jeweils in Umfangsrichtung ausgerichteten Gewindebohrungen (3) mit entgegengesetzter Steigung versehen sind, in die eine mit einer Verstelleinrichtung versehene Schraube (4) eingreift. Der Durchmesser des Spannringes (1) kann auf diese Weise in an sich bekannter Weise verändert werden.

Auf seiner Innenseite ist der Spannring (1) mit vier Laschen (5) versehen, die jeweils U-förmig ausgebildet sind und mit ihrem ersten, obenliegenden Schenkel (6) eine zu der Oberkante (7) des Spannringes (1) parallele Auflagefläche bilden. Diese Auflagefläche des ersten Schenkels (6) jeder Lasche (5) liegt dabei um die Höhe (a) unterhalb des Randes (7) des Spannringes (1), wobei diese Höhe der Dicke (a) eines Blinddeckels (8) entspricht, der auf die Auflageflächen der Schenkel (6) der Laschen (5) auflegbar ist. Jede der Laschen (5) besitzt einen zweiten Schenkel (9), in den eine Nivellierschraube (10) eingesetzt ist. Die Anordnung des Steges der Laschen (5) und die rechtwinklig vom Steg abstehenden Schenkel (6 und 9) sind dabei so gewählt, daß die Nivellierschrauben (10) in Richtung der senkrecht zu dem Rand (7) verlaufenden Achse (11) des Spannringes (1) angeordnet sind.

Jede Lasche besitzt in ihrem ersten Schenkel (6) einen in Umfangsrichtung verlaufenden, einseitig offenen Schlitz (12), der mit einer Einführungsschräge versehen ist, und in diesen Schlitz können die Schäfte von Befestigungsschrauben (13) eingeschwenkt werden, die durch Bohrungen (15) am Rand des Deckels (8) durchgesteckt und mit Gleitmuttern (14) versehen sind. Die Anordnung der Schlitze (12) und die Ausgestaltung der Gleitmuttern (14) ist dabei so gewählt, daß die an den Schrauben (13) angeordneten Gleitmuttern (14) beim Aufsetzen des Deckels (8) auf die oberen Schenkel (6) der Laschen (5) und nach dem durch ein Verdrehen des Deckels (8) im Uhrzeigersinn erfolgten Einschwenken der Schäfte der Schrauben (13) in die Schlitze (12) mit einer Kante an der Innenwand (16) des Spannringes (1) anliegen, daher unverdrehbar sind und das Anziehen der Befestigungsschrauben (13) von oben in einfacher Weise erlauben.

Der Spannring (1) läßt sich in einfacher Weise durch entsprechende Einstellung seines Umfanges von oben her in eine Bohrung eines Hohlraumbodens - der nicht dargestellt ist - einsetzen. Durch Verdrehen der Nivellierschrauben (10) mit Hilfe eines Schraubendrehers, der von oben her durch die Schlitze (12) eingeführt wird, die zu diesem Zweck bis in einen Bereich reichen, der in der Achsrichtung (11) mit den Nivellierschrauben (10) fluchtet, kann der Spannring (1) mit seiner Oberkante (7) fluchtend zum umgebenden Boden ausgerichtet werden. Ist dies geschehen, kann der Durchmesser des Spannringes (1) durch Verdrehen der Schraube (4) so vergrößert werden, daß eine Preßpassung entsteht, durch die der Ring (1) befestigt wird. Danach kann der Blinddeckel (8) in der vorher schon geschilderten Weise aufgesetzt, im Uhrzeigersinn verdreht und mit den Schrauben (13) befestigt werden. Weil der Spannring (1) sich über die Nivellierschrauben (10) am Boden des Hohlraumes und durch Preßpassung an der Wandung der Bohrung abstützt, wird auf diese Weise eine trittfeste und sichere Befestigung des Blinddeckels (8) erreicht. Da die Oberkante (7) des Spannringes auch fluchtend zu dem umgebenden Boden ausgerichtet werden kann, entsteht eine mit der Raumbodenebene fluchtende Abdeckung, die formschön ist und keine störenden Stolperkanten aufweist.

Der Blinddeckel (8) kann schließlich noch in an sich bekannter Weise (DE-GM 775 11 354) mit einem klappbaren Kabelauslaß versehen werden, so daß die Abdeckung auch als bodenbündiger Kabelauslaß geeignet ist.

Die Laschen (5) sind am Spannring (1) jeweils mit einer Schraube (17) befestigt, die in eine von mehreren Öffnungen (18) im Spannring (1) eingesetzt und in eine Gewindebohrung im Steg der Lasche (5) eingreift. Durch Versetzen der Schraube (17) in eine der Öffnungen (18) wird es möglich, den Abstand (a) der Auflagefläche des Schenkels (6) jeder Lasche zu verändern und beispielsweise auf ein solches Maß einzustellen, daß der Blinddeckel (8) zusammen mit einem Fußbodenbelag in den Spannring (1) eingesetzt werden kann. Auf diese Weise wird es auch möglich, einen Blinddeckel mit Fußbodenbelag einzusetzen, der fluchtend mit der Ebene eines Fußbodens ist.

## Patentansprüche

1. Vorrichtung zum Verschließen von gebohrten Kabelauslaßöffnungen in Hohlraumböden von Bürogebäuden oder dergleichen mit einem Blinddeckel (8) gekennzeichnet durch einen Ring (1) als Nivellierrahmen, der mit zum Ringinneren gerichteten Laschen (5) versehen ist, die mit Nivellierschrauben (10) und mit einer Auflage- und Befestigungsfläche (6) für den Blinddeckel (8) versehen sind.

2. Vorrichtung nach Anspruch 1, dadurch gekennzeichnet, daß der Ring als ein offener und an den aneinandergrenzenden Enden (1a, 1b) durch eine Schraubverbindung (4) zusammengehaltener Spannring (1) ausgebildet ist.

3. Vorrichtung nach Anspruch 1 oder 2, dadurch gekennzeichnet, daß die Laschen (5) U-förmig ausgebildet und mit dem die beiden Schenkel (6, 9) des U verbindenden Steges in Achsrichtung (11) des Ringes (1) so an diesem befestigt sind, daß der erste und nach dem Einbau obenliegende Schenkel (6) um mindestens die Dicke (a) des Deckels (8) unterhalb des Randes (7) und innerhalb des Ringes (1) liegt.

4. Vorrichtung nach Anspruch (3), dadurch gekennzeichnet, daß der innerhalb des Ringes (1) liegende Schenkel (6) eine parallel zum Rand (7) des Ringes (1) verlaufende Auflagefläche und einen einseitig offenen, von einer Kante des Schenkels (6) ausgehenden Schlitz (12) für eine Befestigungsschraube (13) des Deckels aufweist.

5. Vorrichtung nach Anspruch 4, dadurch gekennzeichnet, daß der Schlitz (12) in Umfangsrichtung des Ringes ausgerichtet ist.

6. Vorrichtung nach Anspruch 4, dadurch gekennzeichnet, daß dem Deckel (8) Schrauben (13) mit Gleitmuttern (14) zugeordnet sind, die nach dem Einschwenken der Schraubenschäfte in die Schlitze (12) unverdrehbar an der Innenwand (16) des Ringes (1) anliegen.

7. Vorrichtung nach Anspruch 6, dadurch gekennzeichnet, daß die Schlitze (12) mit einer Einführschräge versehen sind.

8. Vorrichtung nach Anspruch 3, dadurch gekennzeichnet, daß der zweite Schenkel (9) jeder Lasche (5) mit einer aus dem Ring (1) in dessen Achsrichtung (11) herausragenden Nivellierschraube (10) versehen ist.

9. Vorrichtung nach Anspruch 8, dadurch gekennzeichnet, daß der Schlitz (12) in dem ersten Schenkel (6) jeder Lasche bis in einen, in Achsrichtung (11) des Ringes (1) mit der Nivellierschraube (10) fluchtenden Bereich reicht.

10. Vorrichtung nach Anspruch 1 oder einem der übrigen Ansprüche, dadurch gekennzeichnet, daß der Steg jeder Lasche (5) mit mindestens einer Schraube (17) am Ring (1) befestigbar ist, die wahlweise in Öffnungen (18) einsetzbar ist, die in der Höhe des Ringes (1) versetzt angebracht sind.

11. Vorrichtung nach Anspruch 10, dadurch gekennzeichnet, daß die Öffnungen (18) zum Einsetzen der Schrauben (17) am Ring (1) angebracht sind und längs eines Spirallinienabschnittes (19) angeordnet sind, der schräg zur Achse (11) des Ringes (1) am Umfang desselben verläuft.
